# EUROPEAN PATENT APPLICATION

(11) **EP 2 239 198 A2**
(43) Date of publication of application: **13.10.2010**
(21) Application number: 10159090.9
(22) Date of filing: 06.04.2010
(51) Int. Cl.: B64D 45/00

(54) **A system and a method for managing events**

(30) Priority: 07.04.2009 IL 19810709
(71) Applicant: Amos Group Ltd., 71286 Lod (IL)
(72) Inventor: Sasson, Shmuel, 44261, Kfar-Saba (IL); Raviv, Yoram, 40295, Hofit (IL); Gilad, Ram, 44454, Kfar-Saba (IL); Lotan, Lior, 76832, Ramot Meir (IL); Sterner, Eitan, 48611, Rosh-Ha'Ayin (IL); Shavit, Gil, 44864, Cohav Yair (IL)
(74) Representative: Graf, Werner

(57) **Abstract**

An event management system, the event management system including: (i) a server, configured to: (a) provide to a control user station of the vehicle a reconnaissance video stream that incorporates at different times video contents received from different vehicle mounted video cameras; to (b) selectively change a security threat mode in response to security data that is received from at least one remote unit which is located on the vehicle; and to (c) provide to the control user station an event focused video stream that includes video content from a group consisting of at least one video camera selected in response to the security threat mode; and (ii) a control user station configured for displaying video content that is received from the server to a user of the event management system.

## Description

### BACKGROUND OF THE INVENTION

The system relates to system and methods for managing events in vehicle, such as security events, safety events, service level events, and so forth.

### SUMMARY OF THE INVENTION

An event management system, the event management system including: (i) a server, configured to: (a) provide to a control user station of the vehicle a reconnaissance video stream that incorporates at different times video contents received from different vehicle mounted video cameras; to (b) selectively change a security threat mode in response to security data that is received from at least one remote unit which is located on the vehicle; and to (c) provide to the control user station an event focused video stream that includes video content from a group consisting of at least one video camera selected in response to the security threat mode; and (ii) a control user station configured for displaying video content that is received from the server to a user of the event management system

A method for managing an event, the method including carrying out by a server which is installed in a vehicle: (a) providing to a control user station of the vehicle a reconnaissance video stream that incorporates at different times video contents received from different vehicle mounted video cameras; (b) selectively changing a security threat mode in response to security data that is received from at least one remote unit which is located on the vehicle; and (c) providing to the control user station an event focused video stream that includes video content from a group consisting of at least one video camera selected in response to the security threat mode.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Figure 1 illustrates an event management system according to an embodiment of the invention;

Figure 2 illustrates a crew button controller according to an embodiment of the invention;

Figure 3 illustrates a video analyzing and compression unit according to an embodiment of the invention;

Figure 4 illustrates locations of video cameras within an airplane, according to an embodiment of the invention;

Figure 5 illustrates locations of different components of the event management system inside a cockpit of airplane, according to an embodiment of the invention;

Figure 6 illustrates a process flow according to an embodiment of the invention; and

Figure 7 illustrates a method for managing an event, according to an embodiment of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

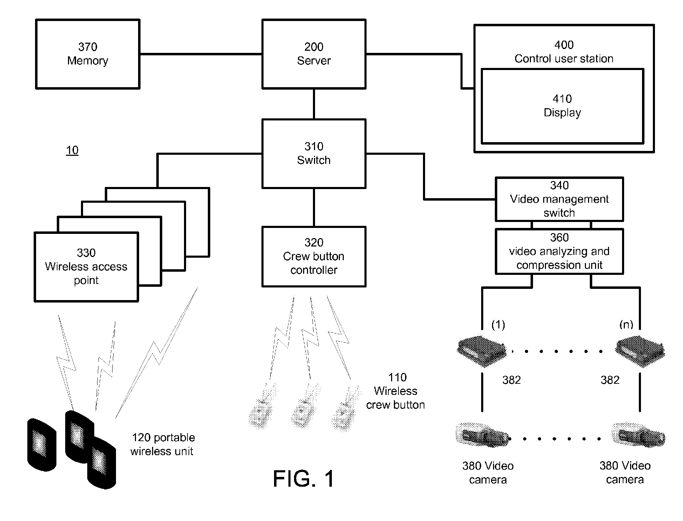

Figure 1 illustrates event management system 10, according to an embodiment of the invention. Event management system 10 may be installed and/or incorporated into different types of vehicles, according to different embodiments of the invention. By way of example, different embodiments of event management system 10 may be used in airplanes (and other types of aircraft), ships, different kinds of trains, and so forth. The event management system may also be extended to other types of uses (even in stationary constructions), e.g. in situations in which a security event may occur in controlled confined space which are supervised by a trained crew (e.g. in a movie theater).

Conveniently, all of the components of event management system 10 are installed on a single vehicle (or group of adjoined vehicles, e.g. train cars), where some components may be installed in the interior of the vehicles, and others may, according to an embodiment of the invention, be installed on an exterior thereof or within a structure thereof (e.g. sensors and detectors).

Event management system 10 (ab hinc also referred to as system 10) includes server 200 and control user station 400 which are connected in a data communication link for transmission of video and other types of information. System 10 also includes (or has access to) remote units such as video cameras, portable wireless units, and so on, which provide information to server 200.

It is noted that control user station 400 is incorporated, according to an embodiment of the invention, into a control panel (also referred to as instrument panel) of the vehicle (e.g. a dashboard or a cockpit panel) of the vehicle, and may share resources with other vehicle system (e.g. alternating display, or sharing programmable buttons, etc.). Control user station 400 may also be a stand alone control station.

It is noted that according to different embodiments of the invention, system 10 together with its different subsystem and components is able to manage different situations, and may be fashioned to cope with different types of problems, whether security, safety or service issues that arise, as well as other types of issues. While the description below focuses mainly on security issues, a person who is skilled in the art would realize that system 10 may be used to manage other types of events as well (e.g. safety, service), mutatis mutandis.

According to an embodiment of the invention, control user station 400 includes a stationary monitor 410 with a touch screen activation capabilities. According to an embodiment of the invention, control user station 400 has three or more buttons associated with different security threat modes (e.g. red, yellow, and green buttons). According to an embodiment of the invention, control user station 400 enables a user to initiate different functionalities (e.g. automatic video survey, specific monitoring, and cockpit's entrance clearance view).

According to an embodiment of the invention, system 10 may include a client (e.g. a thin client, a VGA client) for utilizing an existing display system of the vehicle.

Server 200 is configured to provide to control user station 400 of the vehicle a reconnaissance video stream that incorporates at different times video contents received from different vehicle mounted video cameras 380. Such a reconnaissance video stream, which may also be referred to as virtual patrol, may provide a control crew (such as a driver, a pilot, an engine driver, air crew person, a security officer, and so forth) an inspection of different locations within the vehicle (and possibly also external views, and/or views received from external cameras). An order of the video cameras 380 from which the video content is viewed may be determined in advance (e.g. according to different routines), and may also be controlled by an operator of control user station 400.

According to different embodiments of the invention, different video protocols may be implemented in system 10. According to an embodiment of the invention, MPEG4/ H.264 encoder with one or more detection capabilities is used.

It is noted that control user station 400 may also provide additional information (e.g. upon selection of the operator), and that the reconnaissance video stream is not necessarily displayed at all times. It is also noted that the interchanging between source video cameras used for the reconnaissance video stream may also be, according to an embodiment of the invention, completely controlled by the operator.

Usually the reconnaissance video stream may be provided during a routine mode, in which no specific threat or event is detected or suspected. During such routines times, server 200 may also provide control user station 400 additional information to be provided to a user thereof (e.g. data from additional sensors, procedure guidelines, reminders, and so forth), as well as an interface for controlling different aspects and components of system 10.

System 10 is adapted to operate in different modes of security threats, in different types of security events (or lack thereof). Server 200 is further configured to selectively change a security threat mode in response to security data that is received from at least one remote unit which is located on the vehicle; and to provide to control user station 400 an event focused video stream that includes video content from a group consisting of at least one video camera 380 selected in response to the security threat mode.

In addition (or instead of) the event focused video stream, server 200 may provide control user station 400 with other information, both event focused (e.g. data from other sensors, reaction guidelines and procedures, and so forth) and other information, which is not necessarily associated with the specific security event. For example, as will be further discussed below, the event focused video may provide control user station 400 with video data from video cameras 380 that cover a specific location within the vehicle that is associated with the event (e.g. as identified by an operator, by a digital processing of video inputs, by location of other sensors, by locations of remote units such as portable wireless units which issued an alert).

It is noted that according to different embodiments of the invention, some of which are discussed below, communication with different remote units in the vehicle (either units of the event management system or other units) may be unidirectional or bidirectional.

Control user station 400 is configured for displaying video content that is received from server 200 to a user of the event management system 10. Additionally, control user station 400 may also provide to the user other information (e.g. textual/visual/vocal), which may be event related or other. Also, control user station 400 may also include (and/or provide) and interface for receiving instructions from an operator of which.

As aforementioned, event management system 10 may be used in different types of vehicles. According to an embodiment of the invention, the vehicle is an aircraft. According to an embodiment of the invention, control user station 400 may be located in a cockpit of the aircraft. According to an embodiment of the invention, server 200 may and may not be located in the cockpit of the aircraft. Generally, server 200 may be proximate (and possibly combined) with control user station 400, but this is not necessarily so.

According to an embodiment of the invention, server 200 is further configured to provide guidance media for instructing a crewperson of reaction guidance selected in response to the security threat mode. Different scenarios, events, and situations may require different reactions from crew, personnel, and/or other people. It is noted that in many vehicles the amount of reactions required for the different scenarios that may evolve is vast, where event management system 10, after an identification of a type of the event, may provide the required reaction guidance require for quick and effective response by the crew.

It is noted that according to an embodiment of the invention, the identification of the event (or of the suspected event) may be carried out autonomously by server 200, e.g. by analyzing video content and/or information received from other sensors (e.g. cabin air pressure). According to an embodiment of the invention, the identification is made by a crew person (e.g. by an interface of control user station 400 or of a remote portable unit as discussed below), or in response to a crew person input.

According to an embodiment of the invention, server 200 is configured to selectively change the security threat mode in response to sound signal that is received from at least one acoustic sensor (e.g. of system 10 or otherwise installed within the vehicle) which is located on the vehicle. It is noted that acoustic sensors may be used for detection of man voices (e.g. shouting and so forth), for detection of physically originated sounds (e.g. explosions), and of mechanical sounds.

According to an embodiment of the invention, server 200 is configured to selectively change the security threat mode in response to security data that is received from at least one sensor that is located on the vehicle; wherein the sensor is configured to detect chemical materials.

According to an embodiment of the invention, server 200 is configured to selectively change the security threat mode in response to security data that is received from at least one volumetric sensor that is located on the vehicle; wherein the volumetric sensor is configured to detect a presence of a person. The volumetric sensor (e.g. passive IR sensor, acoustic volumetric sensor, and so forth) may be used, for example, for detection of people at the toilettes of the vehicle, where video photography is problematic, and in places where illumination is problematic.

According to an embodiment of the invention, server 200 is configured to selectively change the security threat mode in response to an alert that is received from a portable wireless unit and which is triggered by a cabin crewperson. Such portable wireless unit may be, for example, a wireless crew button 110 or a wireless personal digital assistant (PDA) 120, each of which usually having an appropriate software and/or firmware installed.

According to an embodiment of the invention, portable wireless unit 120 is at least partially contained within a jacket (not illustrated) that includes an electronic circuit that can interact with server 200. The jacket may be made of a resistant material, but this is not necessarily so. For example, the jacket may include selection buttons (e.g. red, yellow, green), and the electronic circuit included within the jacket may send to server 200 information of button selected by the user. For example, the electronic signal may transmit locatable signals used by an external system to determine a location of portable wireless unit 120, and so forth.

It is noted that, according to an embodiment of the invention, system 10 may include multiple sensors that are configured to detect signals of portable wireless unit 120 (or of the jacket thereof, a wireless button crew 110, and so forth), wherein server 200 is configured to determine a location of the portable wireless unit in response to information that is received from the sensors.

According to an embodiment of the invention, portable wireless unit 120 is configured to display a portable unit security management interface which is selected in response to the security threat mode (usually either by server 200 or by portable wireless unit 120); wherein the potable unit security management interface enables a cabin crewperson (e.g. a steward or an air marshal) to operate at least one vehicle security system.

According to an embodiment of the invention, server 200 is configured to selectively change the security threat mode in response to an alert that is received from the control user station 400 and which is triggered by a vehicle control crewperson. It is noted that, according to an embodiment of the invention, information from different sources may be used for selectively changing by server 200 the security threat mode (e.g. any combination of the abovementioned sources). It is further noted that a portion of the processing and/or analyzing of information may be carried out by processors external to server 200 (e.g. by system 10 processors such as this of video unit 360, by a processor of a vehicle system or main vehicle computer, and so forth).

According to an embodiment of the invention, server 200 is further configured to analyze video content of at least one of the vehicle mounted video cameras 380 for issuing a potential threat alert, and to selectively change the security threat mode in response to the potential threat alert. It is noted that at least some of the video cameras 380 may be overt cameras, and that at least some of the video cameras 380 may be covert cameras.

According to an embodiment of the invention, system 10 includes (or components of which such as one or more wireless access points 330 can communicate with) at least one portable wireless unit 120 that is configured to display video content. According to an embodiment of the invention, server 200 is further configured to transmit video content from at least one vehicle mounted video camera 380 to a portable wireless unit 120 of a crewperson. According to an embodiment of the invention, portable wireless unit 120 is a personal digital assistant (PDA), a laptop computer, a tablet PC, or a device of the like, having a dedicated software and/or firmware installed thereon.

The portable wireless unit 120 may be used by a cabin crew person (or other crewperson) for receiving of video content and/or other information from server 200, for communication with control user server and/or with other portable wireless units 120 (e.g. voice, video conference, or data communication), and to issue instructions, either to server 200 or to other units. Different such portable wireless units 120 may be used for different types of personnel in different embodiments of the invention. For example, according to an embodiment of the invention, such a portable wireless unit 120 may be used by an armed air marshal located in the cabin of the aircraft, for requesting and viewing video from a specific video camera 380, for issuing a silent alert, and for receiving instructions about different situations (e.g. cabin pressure loss during a hijacking situation, extreme noise, shouts in the cabin, and so forth).

It is noted that according to an embodiment of the invention, different video content may be provided to different units of system 10. According to an embodiment of the invention, server 200 is configured to transmit to the portable wireless unit 120 video content that is at least partly similar to the video content provided to the control user station 400. According to an embodiment of the invention, server 200 is configured to transmit to the portable wireless unit 120 video content that is different from the video content provided to the control user station 400.

According to an embodiment of the invention, portable wireless unit 120 is further configured to provide to the crewperson a security event management user interface, wherein server 200 is configured to transmit to the portable wireless unit 120 video content that is selected in response to a request received from the portable wireless unit 120. It is noted that the security event management user interface of the portable wireless unit 120 may serve to different functionalities, e.g. similar to those discussed in relation to control user station 400.

It is noted that, according to an embodiment of the invention, system 10 may receive information pertaining to a location of the portable wireless unit 120 (either within the vehicle or external to it), and to provide portable wireless unit 120 information in respect to the location. Also, the location may be used for other decisions by server 200; for example, the scenario of the event and the reaction instructions provided by server 200 may differ if the portable wireless unit 120 is in different location in respect to a location of the event. According to an embodiment of the invention, multiple sensor/transceivers are installed within the vehicle, for locating portable wireless units 120 and/or wireless crew buttons 110 (a location of which may also be used by server 200).

According to an embodiment of the invention, control user station 400 is configured to display a security management interface which is selected by server 200 in response to the security threat mode (e.g. where different security threat modes have different security management interfaces associated with which); wherein the security management interface enables a vehicle operator user to operate at least one vehicle security system (or other system of the vehicle or which is located within the vehicle).

The security management interface may be at least partly graphical (e.g. using a touch screen or buttons with programmable functions), at least partly voice operated, and so forth.

According to an embodiment of the invention, system 10 further includes a cockpit door locking mechanism controller (not shown) that is controllable by the security management interface. The cockpit door locking mechanism controller may enable locking and/or unlocking of a door of the cockpit (e.g. in an entry to the cockpit authorizing scenario).

According to an embodiment of the invention, server 200 is further configured to selectively change the security threat mode is response to security data that is received from an airport security system (or from other external security system, e.g. central train company security system, and so forth).

For example, information that may be received from an airport security system (or an equivalent security system) may be information relating to a suspect person. Such information may be used for location-related decisions (e.g. giving higher priority at the reconnaissance video stream for cameras covering a seat of the suspect, and for video processing, identifying the suspect person.

According to an embodiment of the invention, system 10 supports aircraft parking surveillance application - allowing the security authorities to supervise activities of ground maintenance teams (cleaners, porters etc.) and any unauthorized approach to the aircraft.

According to an embodiment of the invention, system 10 enables the security authorities to carry out different video related information such as downloading video, recording streaming video, rewinding video, synchronizing video and/or other information with system 10 and other operations. It is noted that such operations may also be enables by system 10 in relation to other types of information.

Referring to video cameras 380, it is noted that video cameras 380 may, according to an embodiment of the invention, be integral to the vehicle (e.g. as in some models of passenger airplanes). Also, either analogue or digital video cameras 380 may be used. Video cameras (or parallel sensors) may detect signals in different parts of the spectrum (e.g. visual, infra-red, etc.). According to an embodiment of the invention wherein at least one video camera 380 is an analogue video camera, a digital to analogue converter 382 is used for converting the video signal received from that video camera 380 to a digital signal.

According to an embodiment of the invention, system 10 includes a video analyzing and/or compression unit 360, which may receive video signals from one or more video cameras, and determine which signals to transmit towards server 200 and/or which compression rate should be used for any video signal so transmitted. According to an embodiment of the invention, video analyzing unit 360 may communicate with a rule engine of server 200 (not shown) that defines events.

According to an embodiment of the invention, system 10 facilitates (e.g. by server 200) bidirectional communication for coordination between users using to different units (e.g. control user station 400 and portable wireless unit 120).

The operation of all of the user interfaces of the different units is conveniently simple. According to an embodiment of the invention, 3 operational status are implemented - routine, alert and emergency (green, yellow and red)

According to an embodiment of the invention, system 10 includes a rule engine mechanism (not shown, conveniently implemented within server 200) which is a combination of hardware and software, which executes dedicated algorithms that generates the event trigger followed by predefine thresholds and references.

Once the rule engine (and/or server 200) defines an event, system 10 is conveniently immediately triggered into a "Yellow" status (Alert), followed by an operational guidance that is launched for the relevant decision maker (Pilot, designated crew member or security personnel if present).

According to an embodiment of the invention, the implemented algorithms are based on a real time data audio and video processing (e.g. motion analytics-sudden movement, irregular noise, suspect locators, and passengers vs. crew counting and location etc').

Referring to the at least one wireless crew button 110, according to an embodiment of the invention it is a personal portable button that includes a two-way mobile, wireless, communication device. According to an embodiment of the invention, wireless crew button 110 is a concealed device for cabin crew members, which is capable of both triggering an alert and receiving a silent alert indication (usually including rechargeable batteries and/or other power source).

According to an embodiment of the invention, wireless crew button 110 is configured to send a security threat mode indication to server 200, e.g. upon a secured (with enabler to prevent false activation) activation.

According to an embodiment of the invention, wireless crew button 110 includes a powerful vibrating device - to be activated upon the alert signal. The vibrating device may be replaced or supported by other output devices such as buzzer and/or speaker.

According to an embodiment of the invention, wireless crew button 110 is configured to indicate its location, upon alert activation.

According to an embodiment of the invention, when wireless crew button 110 initiates an alert, at least one local covering video camera 380 is chosen by server 200 to present the video stream of the marked event location to the control user station 400 and/or portable wireless device 120.

According to an embodiment of the invention, system 10 provides in-flight decision makers (pilots, cabin crew and, if present, security personnel) with a real time situational picture as well as command, control and management capabilities.

According to an embodiment of the invention, system 10 enables full operational coordination between the cabin crew and the cockpit. Text and/or visual communication is relayed in real time, providing situational pictures of the passenger cabin.

According to an embodiment of the invention, system 10 includes main switch 310 (which may be, for example, an Ethernet switch) that manages communication between server 200 and other components of system 10 such as video cameras 380, wireless crew buttons 110, and portable wireless devices 120. It is noted that main switch 310 may be connected to any of these other components directly or via an intermediary communication device, such as video management switch 340 (which connects video cameras 380 to main switch 310 or directly to server 200), crew button controller 320 (which connects one or more wireless crew buttons 110 to main switch 310 or directly to server 200) and at least one wireless access point 330 (which connects one or more portable wireless unit 120 to main switch 310 or directly to server 200).

It is noted that, according to an embodiment of the invention, some of the network elements of system 10 are based on existing components of the vehicle (e.g. of the airplane), as in many vehicles (e.g. airplanes, trains) there is a preinstalled data network usable by added systems. According to an embodiment of the invention, some system components are wired through a body of the vehicle. According to an embodiment of the invention, the wireless communication in system 10 corresponds to IEEE.802.11 a/b/g protocol (which is suitable for aircrafts), and/or to Zigbee wireless - IEEE.802.15.4 (which is also permitted in aircrafts). According to an embodiment of the invention, all of some of the wireless communication is encrypted and with an active "firewall" detecting unauthorized entering attempts.

According to an embodiment of the invention, system 10 includes memory unit 370, which may be used for operation as well as for documentation. According to an embodiment of the invention, memory 370 is used for storing captured video content (and/or continuous data from other sensors). According to an embodiment of the invention, server 200 is configured to analyze video content and/or other inputs of sensors, to determine which data to store. It is noted that memory unit 370 may also serve as a durable event data recorder (also referred to as "black box"). It is noted that system 10 may also provide information to a durable event data recorder of the vehicle.

According to an embodiment of the invention, server 200 can use stored information (video and/or other) for training/simulating, thus enabling vehicle personal (and possibly also external crew members) to train for different situations (security, safety, service, air-rage, etc.).

According to an embodiment of the invention, server 200 is configured to select between predefined operation modes (also referred to as security modes) in response to an operation mode indication received from a user, and to interact with at least one remote unit of the event management system 10 in response to the operation mode, wherein in at least one of the operation modes the server does not interact with the remote unit. By way of example, using the same hardware and a given software, system 10 may be utilized in different scenarios resulting from manning of the vehicle crew, from regulations of different airports (or seaports etc.), and so forth.

For example, according to an embodiment of the invention, system 10 has four security modes that can be adjusted and programmed with or without Air Marshals on board, based on the security level assigned to the flight by the airline or the regulatory authorities. According to an embodiment of the invention, the four security modes which may be used by system 10 are:
i. CM - control user station 400 + wireless crew buttons 110.
ii. CC - CM + portable wireless units 120 Station/s for authorized and trained Cabin Crew member/s, and possibly also wireless crew buttons 110.
iii. SA - CM + portable wireless unit 120 for unarmed security agent, and possibly also wireless crew buttons 110
iv. AM - CM + PDA portable wireless unit 120 for an armed air marshal, and possibly also wireless crew buttons 110.

According to an embodiment of the invention, a single implementation of system 10 may be used for all four programmable modes. The system's versatility is conveniently a result of the operating software that allows a vehicle supervisor (e.g. driver/captain) to independently select a security configuration (security modes) in accordance with the company procedures (e.g. airline procedures).

The security procedures and regulations determined by the company, including the order in which system 10 will perform functions in each different scenario, may be programmed, according to an embodiment of the invention, by the company as part of a client software customization phase.

The operating methodology for each user (e.g. a user of control user station 400, a user of a portable wireless unit 120, and so forth) is identical. The primary difference between the security modes is, according to an embodiment of the invention, in the various users' training and focus (trained security personnel focusing on security vs. cabin crew focused on service), as well as the coordination between the system users. System 10 can conveniently be used in any of the modes requested, thereby making the systems versatile and flexible for use with different personnel schedules and the presence of armed/unarmed security personnel.

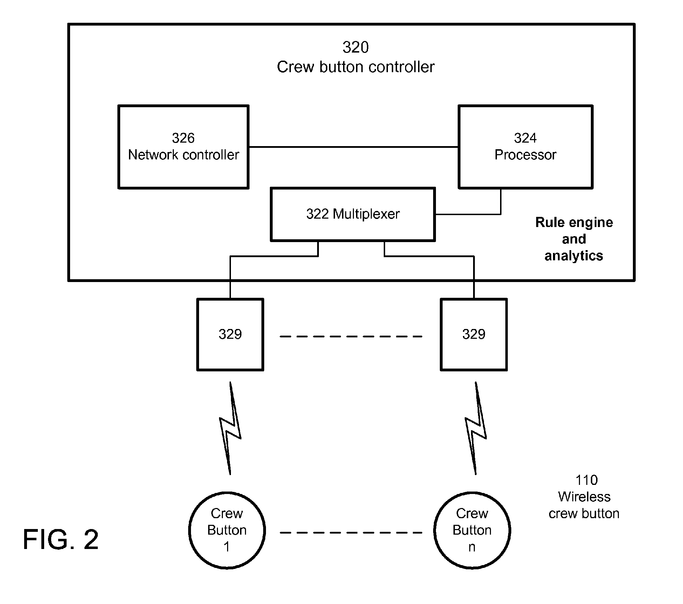

Figure 2 illustrates crew button controller 320, according to an embodiment of the invention. According to an embodiment of the invention, crew button controller 320 includes multiplexer 322 for receiving information from one or more wireless communication units (e.g. RF units) 329, that receives signals from at least one wireless crew button 110. It is noted that wireless communication units 329 may be part of crew button controller 320 and may be external to it (e.g. located in different parts of the vehicle), connected to crew button controller 320 either wirelessly or by wired connection.

Wireless communication units 329 may be used as transmitters, and not only as receivers, for transmitting information and/or signals to wireless crew buttons 110 (e.g. an alert signal, or a silent vibration signal, a voice message, etc.).

According to an embodiment of the invention, the information received via wireless communication units 329 is transferred to a crew button controller processor 324, which is configured to transmit crew buttons information to server 200 via network controller 326. It is noted that processor 324 may utilize different decision rules and analyzing technique to determine which data to transmit to server 200.

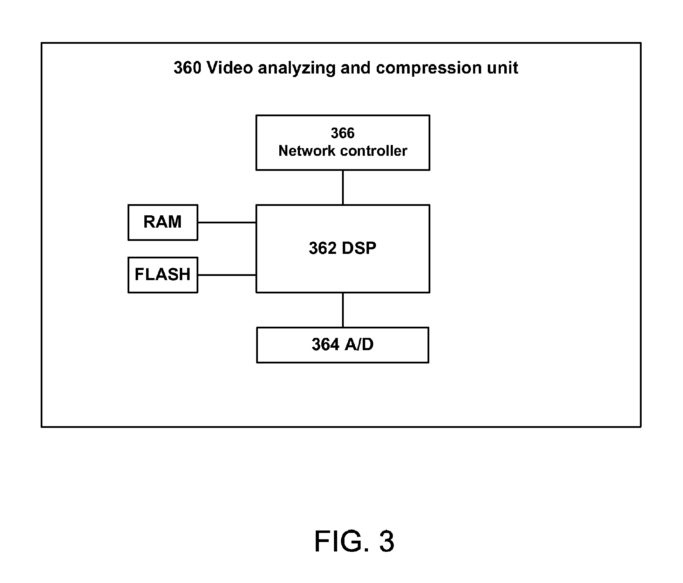

Figure 3 illustrates a video analyzing and compression unit 360, according to an embodiment of the invention. According to an embodiment of the invention, video analyzing and compression unit 360 includes digital signal processor 362, that is configured to process video content (which may be transmitted in a digital manner by digital video cameras 380, or converted from analogue signal to a digital signal by an analogue to digital converter 364 (or 382).

It is noted that processor 362 may also decide how to compress video streams that are transited to server 200, and may also apply video analysis, e.g. for detecting suspicious patterns (such as suspect people, or suspect passengers behavior).

According to an embodiment of the invention, video analyzing and compression unit 360 includes a memory for storing and handling video content (denoted RAM and FLASH). Video analyzing and compression unit 360 may also utilize its memory for other ends, such as operation system, digital signal processing, random access memory, and so forth. According to an embodiment of the invention, video analyzing and compression unit 360 includes network controller 366 for managing communication with server 200.

It is noted that according to an embodiment of the invention, system 10 includes a video processing unit (such as unit 360) that is connected to the server and which is configured to analyze video content of at least one of the vehicle mounted video cameras for issuing a potential threat alert, wherein server 200 is further configured to selectively change the security threat mode in response to the potential threat alert.

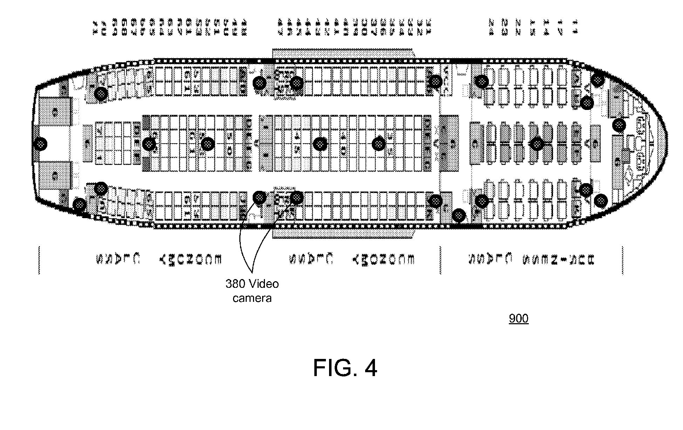

Figure 4 illustrates locations of video cameras 380 within an airplane 900, according to an embodiment of the invention. It is noted that the locations of the video cameras are different between different types of aircrafts, within different airlines, and even within each airline, and that the disclosed locations are offered by way of an example only.

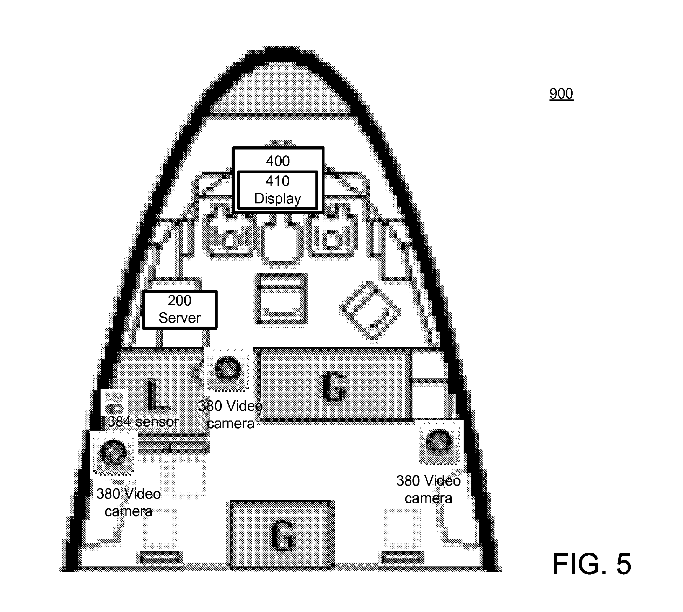

Figure 5 illustrates locations of different components of system 10 inside a cockpit of airplane 900, according to an embodiment of the invention. It is noted that sensor 384 transmits detected information to server 200, and that different types of sensors may be implemented in different embodiments of the invention.

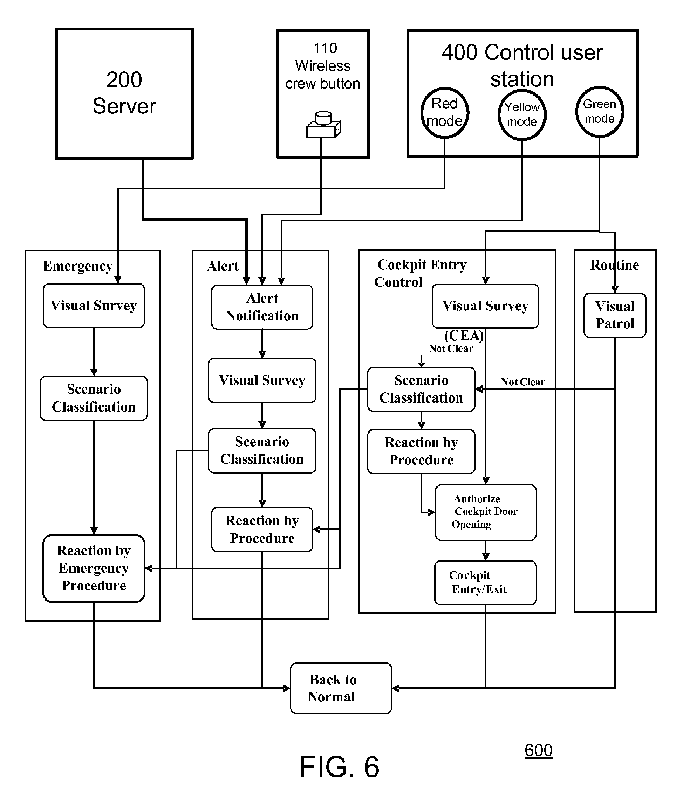

Figure 6 illustrates process flow 600, according to an embodiment of the invention. According to an embodiment of the invention, three treat levels are implemented - routine (green), alert (yellow), and emergency (red). Referring for example to a cockpit entry/exit procedure, this is implemented according to an embodiment of the invention. According to an embodiment of the invention, the cockpit exit procedure includes:
i. cockpit crew exit request (green button on cockpit user station);
ii. visual survey by cockpit crew of Cockpit Entry Area (CEA) using video cameras 380;
iii. Scenario classification by system 10:
   1. If clear than authorize cockpit door opening (release cockpit door).
   2. If not or "alert" is on, reaction by procedure - do not exit, call cabin crew

Likewise, a cockpit entrance procedure according to an embodiment of the invention is:
i. Cockpit entry request
ii. Cockpit crew respond (green button on cockpit monitor)
iii. Visual survey by cockpit crew - CEA
iv. Scenario classification:
   1. Cabin crew request - if clear than authorize cockpit door opening (release cockpit door bolt)
   2. Guest request - if identified and escort by crew member, than authorize cockpit door opening (release cockpit door bolt)
   3. Unknown individual request or CEA not cleared - reaction by procedure : do not exit, call cabin crew

Referring to control user station 400, according to an embodiment of the invention, display 410 supports some or all of the following predefined displays: (a): Schematic vehicle active diagram with the cameras and sensors locations marked (optionally also indicating locations of active and/or triggered wireless units 110 or 120); (b) video streaming of the reconnaissance video; (c) threat status and activation buttons (e.g. Green, Yellow and Red); (d) discrete Alert (yellow and red) functionality: activation of discreet alert will activate vibrations at PDA and Crew Buttons; (e) list of optional scenarios for visual surveys or an emergency cases (S/W)

Referring to portable wireless units 120, according to an embodiment of the invention, unit 120 has a 3.5" or more color screen with at least VGA resolution, and a vibration mode, includes an SDIO socket, and is capable of video streaming receiving and presenting. Portable wireless unit 120 may also support, according to an embodiment of the invention, different types of standard connectivity such as USB connectivity.

According to an embodiment of the invention, the applications that are supported by portable wireless unit 120 are one or more of the following applications:
i. Schematic vehicle active diagram with the Cameras and Sensors locations marked.
ii. Optional: Location indication of activated "crew button"
iii. Video streaming of the video from server 200.
iv. Threat modes and activation buttons (Green, Yellow, and Red).
v. Discrete Alert (yellow and red) functionality: Activation of discreet alert initiated by PDA will activate cockpit monitor alert and Crew Buttons
vi. List of optional scenarios for visual surveys or emergency cases.

It is noted that according to an embodiment of the invention, if multiple portable wireless units 120 are active, a priority is assigned to the different units 120.

Referring to wireless crew buttons 110, according to an embodiment of the invention, wireless crew button 110 is a concealed device for cabin crew members that is capable of both triggering an alert and receiving a silent alert indication. Upon a secured (with enabler to prevent false activation) activation, wireless crew button 110 will conveniently send an alert signal to server 200. According to an embodiment of the invention, wireless crew button 110 includes a powerful vibrating device - to be activated upon the alert signal. According to an embodiment of the invention, wireless crew button 110 can indicate its location, upon alert activation.

According to an embodiment of the invention, wireless crew button 110 is a custom portable transceiver, wireless based on the Zigbee (802.15.4) standard. Solution will also include, according to an embodiment of the invention, stationary transceivers spread across the vehicle. Quantity and distance between transceivers will be determined by the locating accuracy required. All stationary transceivers will be connected to Crew Button Controller 320, which communicates, by IP communication with the server 200.

According to an embodiment of the invention, system 10 further includes a base device for DC charging the portable crew buttons.

According to an embodiment of the invention, system 10 includes wireless hubs for Video streaming broadcast and two way messaging communication, which may be wireless hubs COTS single channel, multicast wireless communication, 1-2Mbit/sec. According to an embodiment of the invention, the wireless hubs are encryption protected wireless hubs.

Referring to video cameras 380, according to an embodiment of the invention, video cameras 380, (analog or digital), provides video streams from locations at the vehicle, wherein, for example (considering an airplane implementation) each of several cabin camera covers 10 to 15 seats, with Low Light Level Camera / IR illuminators for night vision (Optional).

According to an embodiment of the invention, server 200 is further configured to analyze a video stream selected from the reconnaissance video stream and the event focused video stream to detect at least one recognizable face portion, to generate an encoded video stream in which the face portion is processed to be unrecognizable; and to transmit the encoded video stream for storage.

It is noted that the reconnaissance video stream and/or the event focused video stream may display the undistorted recognizable face portion, for operational needs, while the encoded video stream kept in memory. It is noted that conveniently, the unrecognizable face portion is usually so encrypted as to enable a decrypting of the encrypted face portion to provide the recognizable face portion using a suitable decrypting key. In such a case, the face portion may be retrieved at a later time when authorized to.

Referring to server 200, according to an embodiment of the invention server 200 is capable of supporting up to forty H.264 compressed Video Channels (2.5Mbps), and is capable of recording up to forty H264 video streams. It is noted that according to an embodiment of the invention, in case of insufficient resources, few video sources will be resolution reduced, in storing. According to an embodiment of the invention, a distance between server 200 and control user station 400 does not exceed 15 to 20 meters (In case of longer distance the display 410 may be a local PC / Thin Client or an amplified DVI signal which will be routed from the server 200 to the control user station 400).

According to an embodiment of the invention, system 10 implements an airborne server 200, with an operational database reaction guidance, triggered by onboard DSP based preprocessed video streaming, according to rule engine logic filters.

According to an embodiment of the invention, system 10 implements a combination of bidirectional wireless crew alert buttons combines transmit/receive modes with real time positioning and bidirectional Audio/Video/Text communication.

According to an embodiment of the invention, system 10 implements a discrete (possibly airborne) notification/coordination means (Crew Button/PDA), between decision makers in different parts of the vehicle.

According to an embodiment of the invention, system 10 implements a (possibly airborne) system that combines early detection means, real time Audio/Video information and preferred actions guidance for decision makers, on board.

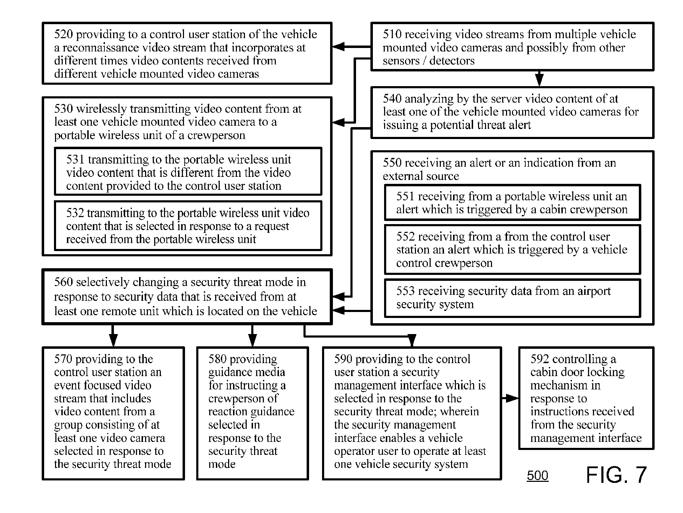

Figure 7 illustrates method 500 for managing an event, According to an embodiment of the invention. It is noted that the stages of method 500 are conveniently carried out by a server that is installed in a vehicle. Referring to the examples set forth in the previous figures, method 500 is conveniently carried out by system 10 (and more specifically, by server 200 with cooperation of other components of system 10). Accordingly, it is noted that different embodiments of method 500 may implement different aforementioned embodiments of system 10 even if not explicitly detailed so.

Conveniently, method 500 starts with stage 510 of receiving video streams from multiple vehicle mounted video cameras and possibly from other sensor/detectors (installed on the vehicle or external to it).

Stage 510 is followed by stage 520 of providing to a control user station of the vehicle a reconnaissance video stream that incorporates at different times video contents received from different vehicle mounted video cameras. Referring to the examples set forth in the previous drawings, the control user station is control user station 400.

According to an embodiment of the invention, stage 510 is also followed by stage 530 of wirelessly transmitting video content from at least one vehicle mounted video camera to a portable wireless unit of a crewperson. Referring to the examples set forth in the previous drawings, the portable wireless unit is portable wireless unit 120.

According to an embodiment of the invention, the transmitting of the video content to the portable wireless unit includes stage 531 of transmitting to the portable wireless unit video content that is different from the video content provided to the control user station.

According to an embodiment of the invention, the transmitting of the video content to the portable wireless unit includes transmitting to the portable wireless unit video content that is selected in response to a request received from the portable wireless unit.

It is noted that video content may also be sent to additional displays within the vehicle (e.g. to secondary control stations), to storage units within the vehicle, or to a remote external unit (e.g. central ground headcounters).

Stages 510 and 520 (and possibly 530) are carried out, according to an embodiment of the invention, in a routine mode, until the server receives indication or information that causes it to interrupt the routine. It is noted that even during a routine mode, the videos are not necessarily received all the time from all the video cameras, and not necessarily provided to the control user station or portable wireless unit (e.g. if that unit is used for other mission or functionality, either of the system or of another vehicle system).

Method 500 continues with stage 560 of selectively changing a security threat mode in response to security data that is received from at least one remote unit that is located on the vehicle.

According to an embodiment of the invention, the selectively changing of the security threat mode is preceded by stage 550 of receiving an alert or an indication from an external source, such as an alert triggered using a remote unit.

According to an embodiment of the invention, selectively changing of the security threat mode is preceded by stage 551 of receiving from a portable wireless unit an alert that is triggered by a cabin crewperson.

According to an embodiment of the invention, method 500 further includes interacting with an electronic circuit comprised in a jacket of the portable wireless unit.

According to an embodiment of the invention, method 500 further includes instructing a providing to the portable wireless unit of a portable unit security management interface that is selected in response to the security threat mode, wherein the potable unit security management interface enables a cabin crewperson to operate at least one vehicle security system.

According to an embodiment of the invention, the selectively changing of the security threat mode is preceded by stage 552 of receiving from a from the control user station an alert which is triggered by a vehicle control crewperson.

According to an embodiment of the invention, the selectively changing of the security threat mode is responsive to security data that is received from an airport security system. According to an embodiment of the invention, the selectively changing of the security threat mode is preceded by stage 553 of receiving security data from an airport security system.

According to an embodiment of the invention, the selectively changing of the security threat mode is preceded by stage 540 of analyzing by the server video content of at least one of the vehicle mounted video cameras for issuing a potential threat alert.

It is noted that other modes, which are not security-threat related, may also be implemented, as discussed above in relation to safety and to service issues, by way of example.

According to an embodiment of the invention, the selectively changing of the security threat mode is responsive to a potential threat alert that is received from a video processing unit, wherein the potential threat alert is issued by the video processing unit as a result of analyzing video content of at least one of the vehicle mounted video cameras.

Once the security threat mode have been changed by the server, several actions may be carried out, as the system now operates in different mode, and the information and possibilities which are required by the crew are different.

According to an embodiment of the invention, stage 560 is followed by stage 570 of providing to the control user station an event focused video stream that includes video content from a group consisting of at least one video camera selected in response to the security threat mode.

According to an embodiment of the invention, method 500 further includes stage 580 of providing guidance media for instructing a crewperson of reaction guidance selected in response to the security threat mode.

According to an embodiment of the invention, method 500 further includes stage 590 of providing to the control user station a security management interface that is selected in response to the security threat mode; wherein the security management interface enables a vehicle operator user to operate at least one vehicle security system. It is noted that security management interface may also be incorporated during routine times. It is further noted that security management interfaces may also be provided to portable wireless remote units.

According to an embodiment of the invention, method 500 further includes stage 592 of controlling a cabin door locking mechanism in response to instructions received from the security management interface.

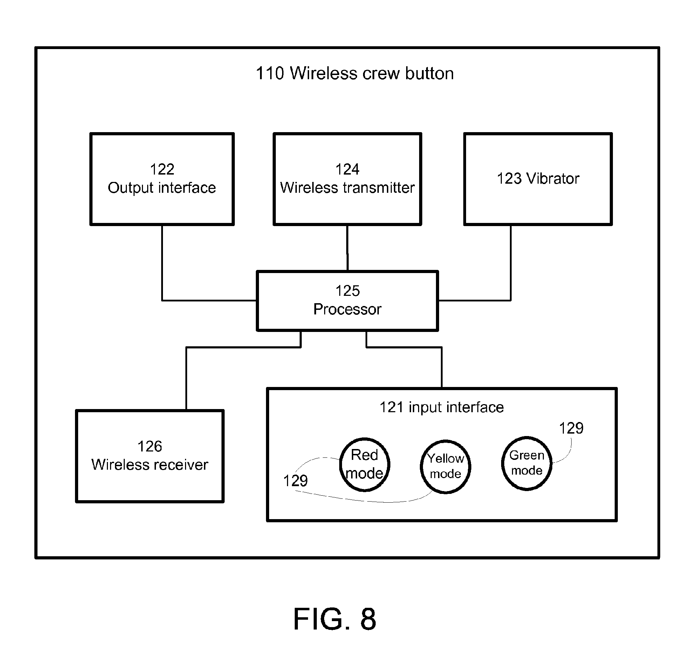

Figure 8 illustrates wireless crew button 110, according to an embodiment of the invention. Wireless crew button 110 is conveniently a wireless crew button for a cabin crew of a vehicle. Wireless crew button 100 includes, according to an embodiment of the invention: (a) input interface 121 for receiving alert indication from a user (e.g. an interface that includes one or more buttons 129, wherein at least one of the buttons triggers a transmission of an alert indication to an external system installed in the vehicle, such as - by way of example - system 10); (b) output interface 122 for indicating a selected security threat mode (e.g. including a buzzer, a loudspeaker, a display, one or more LEDs, and so forth); (c) vibrator 123 for selectively providing an alert vibration in response to the selected security threat mode, and (d) transmitter 124 for wirelessly transmitting locatable signal, for determining of a location of wireless crew button 110 by an external system located within the vehicle (e.g. server 200, via sensors of system 10).

Conveniently, wireless button 110 further includes a wireless receiver 126 for receiving signals from an external system (such as server 200), such as alert indications. It is noted that wireless transmitter 124 and wireless receiver 126 may be combined, according to an embodiment of the invention, in a wireless transceiver (not illustrated).

According to an embodiment of the invention, wireless crew button 110 includes processor 125 that is configured to manage operations of wireless crew button 110.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. An event management system, the event management system comprising:
a server, configured to: provide to a control user station of the vehicle a reconnaissance video stream that incorporates at different times video contents received from different vehicle mounted video cameras; to selectively change a security threat mode in response to security data that is received from at least one portable wireless unit which is located on the vehicle; and to provide to the control user station an event focused video stream that comprises video content from a group consisting of at least one video camera selected in response to the security threat mode; and
a control user station configured for displaying video content that is received from the server to a user of the event management system

2. The event management system according to claim 1,
wherein the server is further configured to provide guidance media for instructing a crewperson of reaction guidance selected in response to the security threat mode;
and/or
wherein the server is configured to selectively change the security threat mode in response to an alert that is received from the control user station and which is triggered by a vehicle control crewperson.

3. The event management system according to claim 1, further comprising:
a video processing unit that is coupled to the server and which is configured to analyze video content of at least one of the vehicle mounted video cameras for issuing a potential threat alert, wherein the server is further configured to selectively change the security threat mode in response to the potential threat alert;
and/or
further comprising a portable wireless unit that is configured to display video content, wherein the server is further configured to transmit video content from at least one vehicle mounted video camera to a portable wireless unit of a crewperson, said video content is different from the video content provided to the control user station.

4. The event management system according to claim 3, wherein the portable wireless unit is further configured to provide to the crewperson a security event management user interface, wherein the server is configured to transmit to the portable wireless unit video content that is selected in response to a request received from the portable wireless unit.

5. The event management system according to claim 1, wherein the server is configured to selectively change the security threat mode in response to an alert that is received from a portable wireless unit and which is triggered by a cabin crewperson.

6. The event management system according to claim 1, wherein the control user station is configured to display a security management interface which is selected by the server in response to the security threat mode; and wherein the portable wireless unit is configured to display a portable unit security management interface which is selected in response to the security threat mode; wherein both the control user station security management interface and the potable unit security management interface enables a crewperson to operate at least one vehicle security system; and wherein said crewperson is at least one from a group comprising: a vehicle operator and a cabin crewperson.

7. The event management system according to claim 1,
wherein the server is further configured to selectively change the security threat mode in response to security data that is received from an airport security system,
and/or
wherein the server is configured to select between predefined operation modes in response to an operation mode indication received from a user, and to interact with at least one portable wireless unit of the event management system in response to the operation mode, wherein in at least one of the operation modes the server does not interact with the portable wireless unit.

8. A method for managing an event, the method comprising:
providing to a control user station of the vehicle a reconnaissance video stream that incorporates at different times video contents received from different vehicle mounted video cameras;
selectively changing a security threat mode in response to security data that is received from at least one portable wireless unit which is located on the vehicle; and
providing to the control user station an event focused video stream that comprises video content from a group consisting of at least one video camera selected in response to the security threat mode.

9. The method according to claim 8, further comprising:
providing guidance media for instructing a crewperson of reaction guidance selected in response to the security threat mode;
and/or wherein the selectively changing of the security threat mode is preceded by receiving from the control user station an alert which is triggered by a vehicle control crewperson;
and/or
wherein the selectively changing of the security threat mode is preceded by analyzing by the server video content of at least one of the vehicle mounted video cameras for issuing a potential threat alert.

10. The method according to claim 8, further comprising wirelessly transmitting video content from at least one vehicle mounted video camera to a portable wireless unit of a crewperson; wherein said video content is different from the video content provided to the control user station.

11. The method according to claim 10, wherein the transmitting of the video content to the portable wireless unit comprises transmitting to the portable wireless unit video content that is selected in response to a request received from the portable wireless unit.

12. The method according to claim 8, wherein the selectively changing of the security threat mode is preceded by receiving from a portable wireless unit an alert which is triggered by a cabin crewperson.

13. The method according to claim 8, further comprising providing to the control user station a security management interface which is selected in response to the security threat mode; and providing to the portable wireless unit of a portable unit security management an interface that is selected in response to the security threat mode, wherein both the control user station and the potable unit security management interface enable a crewperson to operate at least one vehicle security system; and wherein said crewperson is one or more from a group comprising: a vehicle control crewperson and a cabin crewperson.

14. The method according to claim 8, wherein the selectively changing of the security threat mode is responsive to security data that is received from an airport security system.

15. A wireless crew button for a cabin crew of a vehicle, the wireless crew button comprising: an input interface for receiving alert indication from a user; an output interface for indicating a selected security threat mode; a vibrator for selectively providing an alert vibration in response to the selected security threat mode, and a transmitter for transmitting locatable signal, for determining of a location of the wireless crew button by an external system located within the vehicle.
